# EUROPEAN PATENT APPLICATION

(11) **EP 4 290 659 A1**
(43) Date of publication of application: **13.12.2023**
(21) Application number: 22779077.1
(22) Date of filing: 31.03.2022
(51) Int. Cl.: H01M 50/244

(54) **BATTERY AND ASSEMBLY PROCESS THEREFOR**

(30) Priority: 31.03.2021 CN 202110351899
(71) Applicant: Svolt Energy Technology (Wuxi) co., Ltd., Jiangsu 214105 (CN)
(72) Inventor: NING, Yajun, Wuxi, Jiangsu 214105 (CN); XIA, Tianjun, Wuxi, Jiangsu 214105 (CN); YU, Dongpeng, Wuxi, Jiangsu 214105 (CN); JI, Jiashuai, Wuxi, Jiangsu 214105 (CN)
(74) Representative: Groth & Co. KB
(86) International application number: PCT/CN2022/084420
(87) International publication number: WO 2022/206897

(57) **Abstract**

The present application relates to the technical field of lithium battery assembling, and discloses a battery and an assembling method thereof. The battery includes: a cell assembly, two ends of the cell assembly being provided with a positive electrode and a negative electrode respectively; a casing, two ends of the casing being formed as an open end and a rolled edge stop end respectively, the cell assembly extending into the casing from the open end, and the end of the cell assembly with the positive electrode being constrained and stopped at the rolled edge stop end; and a negative electrode connection piece, covering the open end, the negative electrode connection piece being a conductive piece electrically connected to the negative electrode and a casing part of the open end respectively by means of laser welding spots. Through a technical scheme of the present application, the positive and negative electrodes of the battery can be located on the same side, which facilitates the design and welding of an external module busbar, and at the same time can improve a rate capability of the cell assembly.

## Description

### CROSS REFERENCE TO RELATED APPLICATIONS

The present application claims priority to the Chinese patent application No. 202110351899.1, filed on March 31, 2021 to the China Patent Office, and entitled "BATTERY AND ASSEMBLING METHOD THEREOF", the entire content of which is incorporated herein by reference.

### TECHNICAL FIELD

The present application relates to the technical field of lithium-ion battery assembling, and in particular to a battery and an assembling method thereof.

### BACKGROUND

With increasing maturity of a lithium-ion battery technology, lithium-ion batteries are widely used as power batteries in the field of electric vehicles. A structural part of a lithium-ion battery is also an important component of the lithium-ion power battery, which not only guarantees safety and reliability of the lithium-ion battery, but also takes care of the connection between an internal chemical system of the lithium-ion battery and an external module. With the development of the industry, the requirements for rapid charging and discharging of the battery are getting higher and higher, and the requirements for the flow capacity and safety capacity of the lithium battery are also getting higher and higher, so the high rate capability of the structural part is a general trend. However, the existing lithium-ion battery adopts electric resistance welding between a negative electrode of a cell and a casing during a manufacturing process. Since a contact area of electric resistance welding between the cell and the casing is too small, the rate capability of the cell will be affected, and at the same time, the positive and negative electrodes of the battery are located at two opposite ends of the casing, which is not conducive to the design and welding of an external module busbar.

### SUMMARY OF THE INVENTION

An objective of the present application is to propose a battery and an assembling method thereof that enables positive and negative electrodes of the battery to be located on the same side, which facilitates the design and welding of an external module busbar, and at the same time can increase a rate capability of a cell assembly.

In order to achieve the above objective, the present application provides a battery, including: a cell assembly, two ends of the cell assembly being provided with a positive electrode and a negative electrode respectively; a casing, two ends of the casing being formed as an open end and a rolled edge stop end respectively, the cell assembly extending into the casing from the open end, and an end of the cell assembly with the positive electrode being constrained and stopped at the rolled edge stop end; and a negative electrode connection piece, covering the open end, being a conductive piece and electrically connected to the negative electrode and a casing part of the open end respectively through laser welding spots.

Optionally, the open end is provided with a lip abutting against the negative electrode, and an edge of the negative electrode connection piece is bent to form a step attached to the lip.

Optionally, the cell assembly includes a positive electrode cover plate fixed to the positive electrode, and the positive electrode cover plate is provided with a conductive piece electrically connected to a cell; and the battery includes an insulation washer arranged between the positive electrode cover plate and the rolled edge stop end, and the insulation washer is provided with a through hole for the conductive piece to pass through.

Optionally, the battery includes a negative electrode cover plate attached to a surface of the negative electrode connection piece, and the negative electrode cover plate seals the open end.

Optionally, the battery includes a sealing member, the positive electrode of the cell assembly is provided with a liquid injection hole, and the sealing member is fixed to a surface of the liquid injection hole and seals the liquid injection hole; and the cell assembly and the casing are both cylindrical, and a material of the negative electrode connection piece includes any one of copper, iron and aluminum.

In order to achieve the above objective, the present application further provides a battery assembling method, used for assembling the above battery. The battery assembling method includes: inserting a cell assembly into a casing from an open end, in such a way that a positive electrode of the cell assembly is constrained at a rolled edge stop end, and a negative electrode of the cell assembly is located at the open end; attaching a negative electrode connection piece to the negative electrode by performing laser welding; and covering the negative electrode connection piece onto the open end by performing laser welding.

Optionally, the battery assembling method further includes: before a step of covering the negative electrode connection piece onto the open end by performing laser welding, rolling an edge of the open end to form a lip abutting against a periphery of the negative electrode at the open end; and bending an edge of the negative electrode connection piece to form a step attached to the lip.

Optionally, before a step of inserting the cell assembly into the casing from the open end, the battery assembling method further includes steps: attaching a positive electrode cover plate to the positive electrode by performing laser welding to form the cell assembly; installing an insulation washer into the casing from the open end, and attaching the insulation washer to the rolled edge stop end, in such a way to allow the conductive piece on the positive electrode cover plate to pass through the insulation washer and be exposed out of the casing.

Optionally, after the step of inserting the cell assembly into the casing from the open end of the casing, the battery assembling method further includes steps: performing laser welding between the positive electrode cover plate and the rolled edge stop end, and sealing the rolled edge stop end.

Optionally, the battery assembling method further includes steps: injecting an electrolyte solution at a liquid injection hole of the positive electrode; covering a sealing member at the liquid injection hole; and performing laser welding between the sealing member and the cell assembly.

Compared to the prior art, the battery and the assembling method thereof described in the present application have the following advantages:
in the battery assembling method of the present application, laser welding is performed on the negative electrode connection piece and the negative electrode of the cell assembly as well as the casing, thus the laser welding spots are formed between the negative electrode and the negative electrode connection piece, the laser welding spots are formed between the negative electrode connection piece and the casing, then the negative electrode with negative electricity is formed on the casing, and finally the positive and negative electrodes of the battery are located at the same end, which is more conducive to the design and welding of the external module busbar. At the same time, the laser welding spots may make a contact area between the cell assembly and the negative electrode connection piece as well as the casing larger, thus increasing a flow capacity from the negative electrode of the cell assembly to the casing, and improving the rate capability of the cell assembly. Other features and advantages of the present application will be described in detail in the subsequent detailed description.

### BRIEF DESCRIPTION OF THE DRAWINGS

The accompanying drawings which form part of the present application are used for providing a further understanding of the present application, and schematic implementations of the present application and the description thereof are used for explaining the present application and do not constitute an improper limitation of the present application. In the accompanying drawings:
FIG. 1 is a schematic diagram of a three-dimensional structure of a battery according to an embodiment of the present application.
FIG. 2 is a schematic diagram of an exploded structure of a battery according to an embodiment of the present application.
FIG. 3 is a schematic diagram of a partial exploded structure of a battery according to an embodiment of the present application.
FIG. 4 is a schematic diagram of a partial sectional view structure of a battery according to an embodiment of the present application.
FIG. 5 is a flowchart of steps of a battery assembling method according to an embodiment of the present application.
FIG. 6 is a flowchart of steps before step S2 according to an embodiment of the present application.
FIG. 7 is a flowchart of further steps of a battery assembling method according to an embodiment of the present application.

Description of reference numerals:
1 Battery
11 Cell assembly
13 Negative electrode connection piece
15 Negative electrode cover plate
111 Positive electrode cover plate
113 Conductive piece
121 Open end
123 Lip
131 Step
12 Casing
14 Insulation washer
16 Sealing member
112 Cell
114 Liquid injection hole
122 Rolled edge stop end

### DETAILED DESCRIPTION

It should be noted that implementations in the present application and features in the implementations may be combined with each other in the case of not conflicting.

Directional or positional relationships indicated by "length", "width", "upper", "lower", "front", "back", "left", "right", "top", "bottom", "inner", "outer", etc. referred to in the implementations of the present application are directional or positional relationships shown based on the accompanying drawings, and are only for the convenience of describing the present application and simplifying the description, rather than indicating or implying that an apparatus or element referred to must have a specific orientation and be constructed and operated in a specific orientation, thus cannot be understood as a limitation on the present application.

In addition, terms "mounted", "connected", "connection", "fixed", etc. are to be understood in a broad sense, for example, as a fixed connection, as a detachable connection, or as an integral part; as a mechanical connection, as an electrical connection or as mutual communication; and as a direct connection, as an indirect connection through an intermediate medium, as communication within two elements or as an interactive relationship between two elements, unless otherwise explicitly defined. For those of ordinary skill in the art, the specific meanings of the above terms in the present application may be understood according to specific circumstances.

The present application will be described in detail below with reference to the accompanying drawings and in conjunction with the implementations.

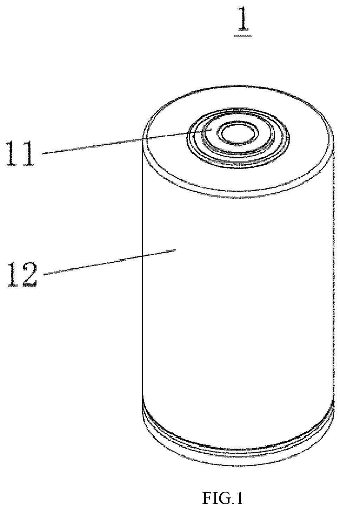

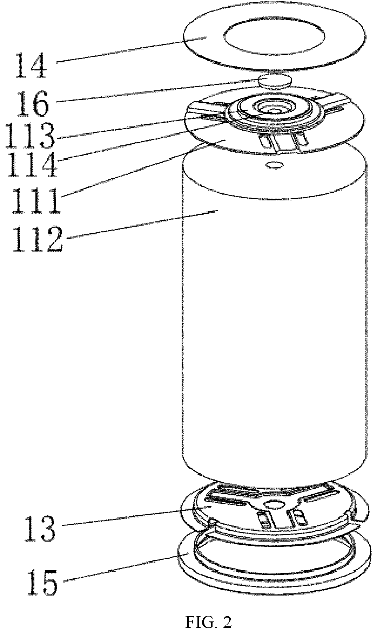

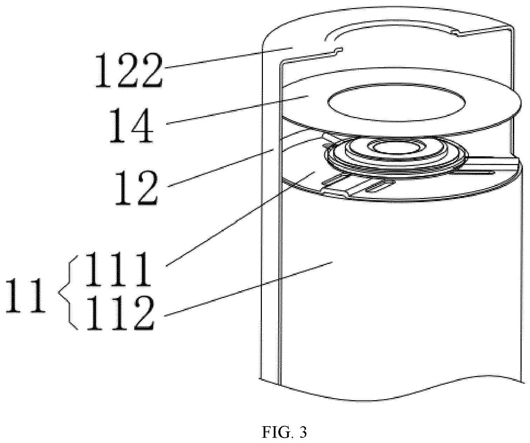

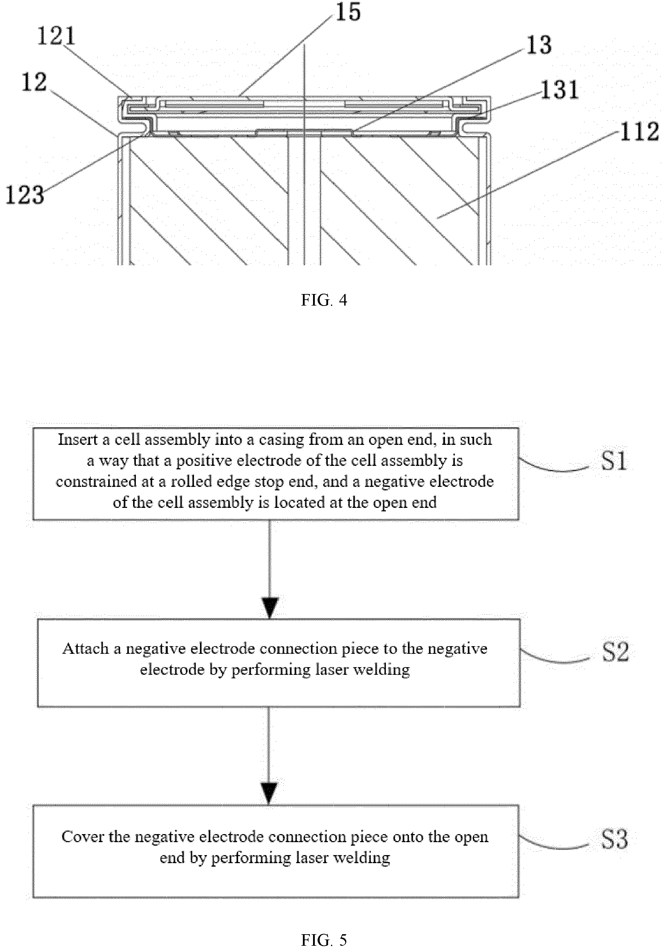

FIG. 1 is a schematic diagram of a three-dimensional structure of a battery according to an embodiment of the present application. FIG. 2 is a schematic diagram of an exploded structure of a battery according to an embodiment of the present application. FIG. 3 is a schematic diagram of a partial exploded structure of a battery according to an embodiment of the present application. FIG. 4 is a schematic diagram of a partial sectional view structure of a battery according to an embodiment of the present application. As shown in FIG. 1-FIG. 4, in the embodiments of the present application, a battery 1 is provided, including: a cell assembly 11, two ends of the cell assembly 11 being provided with a positive electrode and a negative electrode respectively; a casing 12, two ends of the casing 12 being formed as an open end 121 and a rolled edge stop end 122 respectively, the cell assembly 11 extending into the casing 12 from the open end 121, and an end of the cell assembly 11 with the positive electrode being constrained and stopped at the rolled edge stop end 122; and a negative electrode connection piece 13, covering the open end 121, being a conductive piece 113 and electrically connected to the negative electrode and a casing part of the open end 121 respectively through laser welding spots.

Since the two ends of the casing 12 are the open end 121 and the rolled edge stop end 122 respectively, the cell assembly 11 may extend into the casing 12 from the open end 121, so that the positive electrode of the cell assembly 11 faces the rolled edge stop end 122, the negative electrode faces the open end 121, and the cell assembly 11 is limited under action of the rolled edge stop end 122. The negative electrode connection piece 13 covers the open end 121, so that a surface of the negative electrode connection piece 13 is attached to the negative electrode by performing laser welding, and thus laser welding spots are formed between the negative electrode and the negative electrode connection piece 13. Since the negative electrode connection piece 13 is a conductive piece 113, electrical conduction between the cell assembly 11 and the negative electrode connection piece 13 may be achieved. An edge of the negative electrode connection piece 13 is attached to an inner wall of the open end 121 by performing laser welding, so as to form laser welding spots between the negative electrode connection piece 13 and the casing 12. Since electrical conduction is formed between the negative electrode connection piece 13 and the cell assembly 11, electrical conduction may be formed between the negative electrode connection piece 13 and the casing 12, and then the negative electrode with negative electricity is formed on the casing 12, that is to say, the rolled edge stop end 122 is enabled to be a negative electrode with negative electricity, so as to enable the positive and negative electrodes of the battery to be located on the same side.

In the embodiment of the present application, a middle of the rolled edge stop end 122 is provided with a through hole, and a size of the through hole is smaller than a size of the cell assembly 11, so as to stop and limit the cell assembly 11. At the same time, a positive electrode of the external module busbar may be electrically connected with the positive electrode of the cell assembly 11 under action of the through hole, and then a negative electrode of the external module busbar is electrically connected with the rolled edge stop end 122, so as to achieve electrical conduction between the module busbar and the battery 1. Compared to a battery with positive and negative electrodes located at two ends in the prior art, the battery 1 of the present application is more conducive to the design and welding of the external module busbar.

In the embodiment of the present application, laser welding is performed between the negative electrode of the cell assembly 11 and the negative electrode connection piece 13, laser welding is performed on the negative electrode connection piece 13 and the casing part of the open end 121 so that the laser welding spots may be formed between the negative electrode of the cell assembly 11 and the negative electrode connection piece 13, and the laser welding spots may be formed between the negative electrode connection piece 13 and the casing 12. Compared to a mode of electric resistance welding in the prior art, the laser welding spots of the present application can make a contact area between the cell assembly 11 and the negative electrode connection piece 13, as well as the casing 12 larger, thereby improving a flow capacity of the negative electrode of the cell assembly 11 to the casing 12, and improving a rate capability of the cell assembly 11.

In the embodiment of the present application, the cell assembly 11 and the casing 12 are both cylindrical, and a material of the negative electrode connection piece 13 includes any one of copper, iron, and aluminum.

In the embodiment of the present application, the open end 121 is provided with a lip 123 abutting against the negative electrode, and an edge of the negative electrode connection piece 13 is bent to form a step 131 attached to the lip 123.

The lip 123 is arranged at the open end 121, the edge of the negative electrode connection piece 13 is bent to form the step 131 attached to the lip 123, so that the step 131 is attached to the lip 123 and forms a positioning effect when laser welding is performed on the negative electrode connection piece 13 and the casing part of the open end 121, and laser welding can be further performed on the step 131 and the lip 123, which increases the welding area between the negative electrode connection piece 13 and the casing 12, and is more conducive to laser welding between the negative electrode connection piece 13 and the casing part of the open end 121.

In the embodiment of the present application, the cell assembly 11 includes a positive electrode cover plate 111 fixed to the positive electrode, and the positive electrode cover plate 111 is provided with a conductive piece 113 electrically connected to a cell 112. The battery 1 includes an insulation washer 14 arranged between the positive electrode cover plate 111 and the rolled edge stop end 122, and the insulation washer 14 is provided with a through hole for the conductive piece 113 to pass through.

The positive electrode cover plate 111 is arranged on the positive electrode of the cell 112, the conductive piece 113 electrically connected to the cell 112 is arranged on the positive electrode cover plate 111, thereby realizing the electrical conduction of the positive electrode of the cell 112 and the conductive piece 113, and then, when an external busbar module needs to be electrically connected to the battery 1, a positive electrode of the external busbar module may be welded to the conductive piece 113, which is more conducive to welding of the external busbar module and the positive electrode of the battery 1.

The insulation washer is arranged between the positive electrode cover plate 111 and the rolled edge stop end 122 to insulate the positive electrode of the cell assembly 11 from the casing 12 under the action of the insulation washer, and to prevent a condition that the positive electrode of the cell assembly 11 makes contact with the casing 12, and a short circuit occurs. The insulation washer is provided with the through hole for the conductive piece 113 to pass through, so that the conductive piece 113 is exposed out of the casing 12 through the through hole in the insulation washer, i.e., the conductive sheet 113 extends out of the through hole in the middle of the rolled edge stop end 122 to facilitate welding of the external busbar module to the conductive piece 113.

It may be appreciated that the positive electrode cover plate 111 is filled with an insulating material, so that positions where the positive electrode cover plate 111 and the rolled edge stop end 122 are welded are insulated from each other with respect to a position of the conductive piece 113, thereby avoiding a short circuit between the positive electrode cover plate 111 and the casing 12 due to electrical conduction.

In the embodiment of the present application, the positive electrode cover plate 111 and the cell 112 are welded through a laser, and the laser welding spots are formed between the positive electrode cover plate 111 and the cell 112, thereby achieving electrical conduction between the positive electrode cover plate 111 and the positive electrode of the cell 112. The part of the positive electrode cover plate 111 exposed out of the casing 12 is sealed and clamped to the through hole in the middle of the rolled edge stop end 122, thereby fixing the cell assembly 11 into the casing 12 and preventing the cell assembly 11 from shaking relative to the casing 12.

In the embodiment of the present application, the battery 1 includes the negative electrode cover plate 15 attached to the surface of the negative electrode connection piece 13, the negative electrode cover plate 15 seals the open end 121, the negative electrode cover plate 15 is made of insulating materials such as plastic and rubber, and the negative electrode cover plate 15 is attached to the surface of the negative electrode connection piece 13 and seals the open end 121, thereby further reinforcing structural strength of assembling between the cell assembly 11 and the casing 12 under the action of the negative electrode cover plate 15, preventing the cell assembly 11 from shaking in the casing 12, and at the same time, sealing the open end 121 under the action of the negative electrode cover plate 15, preventing dust and sundries from entering the casing 12 from the open end 121 and affecting performance of the battery 1.

In the embodiment of the present application, the battery 1 includes a sealing member 16, the positive electrode of the cell assembly 11 is provided with a liquid injection hole 114, and the sealing member 16 is fixed to a surface of the liquid injection hole 114 and seals the liquid injection hole 114. The positive electrode of the cell assembly 11 is provided with the liquid injection hole 114 so as to facilitate an injection of an electrolyte solution into the cell assembly 11 through the liquid injection hole 114 to decompose electrons through the electrolyte solution, and the sealing member 16 that may cover the surface of the liquid injection hole 114 is arranged to seal the liquid injection hole 114, so as to prevent the electrolyte solution from flowing out of the liquid injection hole 114.

It may be appreciated that the sealing member 16 is an aluminum nail and is fixed to the surface of the liquid injection hole 114 by welding to improve airtightness of the sealing member 16 sealing the liquid injection hole 114.

FIG. 5 is a flowchart of steps of a battery assembling method according to an embodiment of the present application. As shown in FIG. 5, in the embodiment of the present application, a battery assembling method is further provided for assembling the above battery 1, and the battery assembling method includes:
step S1: a cell assembly 11 is inserted into a casing 12 from an open end 121, in such a way that a positive electrode of the cell assembly 11 is constrained at a rolled edge stop end 122, and a negative electrode of the cell assembly 11 is located at the open end 121; step S2: a negative electrode connection piece 13 is attached to the negative electrode by performing laser welding; and
step S3: the negative electrode connection piece 13 covers the open end 121 by performing laser welding.

The cell assembly 11 is inserted into the casing 12 from the open end 121 first, in such a way that the positive electrode of the cell assembly 11 is constrained at the rolled edge stop end 122, and the negative electrode of the cell assembly 11 is located at the open end 121, so that the cell assembly 11 is limited under action of the rolled edge stop end 122. Then, a surface of the negative electrode connection piece 13 is attached to the negative electrode by performing laser welding, thus laser welding spots are formed between the negative electrode and the negative electrode connection piece 13, and electrical conduction between the cell assembly 11 and the negative electrode connection piece 13 is achieved. Finally, the negative electrode connection piece 13 covers the open end 121 by performing laser welding, i.e. an edge of the negative electrode connection piece 13 is attached to an inner wall of the open end 121 by performing laser welding, so as to form laser welding spots between the negative electrode connection piece 13 and the casing 12, electrical conduction between the negative electrode connection piece 13 and the casing 12 is achieved, and then the negative electrode with negative electricity is formed on the casing 12, i.e. the rolled edge stop end 122 is enabled to be a negative electrode with negative electricity.

Compared to the battery 1 with the positive and negative electrodes located at the two ends in the prior art, the battery 1 obtained by the battery assembling method of the present application is more conducive to the design and welding of the external module busbar, and the laser welding spots of the present application can make the contact area between the cell assembly 11 and the negative electrode connection piece 13, as well as the casing 12 larger, so as to improve the flow capacity from the negative electrode of the cell assembly 11 to the casing 12, and to improve the rate capability of the cell assembly 11.

In the embodiment of the present application, before the step of covering the negative electrode connection piece 13 onto the open end 121 by performing laser welding, the battery assembling method further includes:
step S301: an edge of the open end 121 is rolled to form a lip 123 abutting against a periphery of the negative electrode at the open end 121; and an edge of the negative electrode connection piece 13 is bent to form a step 131 attached to the lip 123.

Before the negative electrode connection piece 13 covers the open end 121 by performing laser welding, the edge of the open end 121 is rolled to form the lip 123 abutting against the periphery of the negative electrode at the open end 121, so as to limit the cell assembly 11. The edge of the negative electrode connection piece 13 is bent to form the step 131 attached to the lip 123, so that when laser welding is performed on the negative electrode connection piece 13 and the casing part of the open end 121, the step 131 is attached to the lip 123, and a locating effect is formed. In addition, laser welding can further be performed between the step 131 and the lip 123, which increases a welding area between the negative electrode connection piece 13 and the casing 12, and facilitates laser welding between the negative electrode connection piece 13 and the casing part of the open end 121.

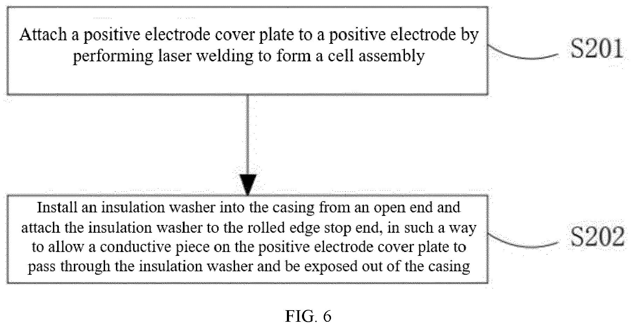

FIG. 6 is a flowchart of steps before step S2 according to an embodiment of the present application. As shown in FIG. 6, in the embodiment of the present application, before the step that the cell assembly 11 is inserted into the casing 12 from the open end 121, the battery assembling method further includes:
step S201: a positive electrode cover plate 111 is attached to the positive electrode by performing laser welding to form the cell assembly 11; and
step S202: an insulation washer 14 is installed into the casing 12 from the open end 121 and attached to the rolled edge stop end 122, in such a way to allow the conductive piece 113 on the positive electrode cover plate 111 to pass through the insulation washer 14 and be exposed out of the casing 12.

Before the step that the cell assembly 11 is inserted into the casing 12 from the open end 121, the positive electrode cover plate 111 is first attached to the positive electrode of the cell 112 by performing laser welding to form the cell assembly 11, and since the positive electrode cover plate 111 is provided with the conductive piece 113 electrically connected with the cell 112, electrical conduction between the positive electrode of the cell 112 and the conductive piece 113 may be achieved. Then, the insulation washer is installed into the casing 12 from the open end 121 and attached to the rolled edge stop end 122, in such a way to allow the conductive piece 113 on the positive electrode cover plate 111 to pass through the insulation washer 14 and be exposed out of the casing 12 to insulate the positive electrode of the cell assembly 11 from the casing 12 under the action of the insulation washer, and to prevent a condition that the positive electrode of the cell assembly 11 makes contact with the casing 12, and a short circuit occurs. The insulation washer is provided with the through hole for the conductive piece 113 to pass through, so that the conductive piece 113 is exposed out of the casing 12 through the through hole in the insulation washer, i.e., the conductive piece 113 extends out of the through hole in the middle of the rolled edge stop end 122 to facilitate welding of the external busbar module to the conductive piece 113.

In the embodiment of the present application, after the step that the cell assembly 11 is inserted into the casing 12 from the open end 121 of the casing 12, the battery assembling method further includes:
step S11: laser welding is performed between the positive electrode cover plate 111 and the rolled edge stop end 122, and the rolled edge stop end 122 is sealed.

Laser welding is performed between the positive electrode cover plate 111 and the rolled edge stop end 122, thus structural stability of assembling of the cell assembly 11 in the casing 12 may be further promoted, the cell assembly 11 is prevented from shaking relative to the casing 12, and at the same time, the through hole of the rolled edge stop end 122 is sealed through a laser welding mode, which prevents dust and sundries from entering the casing 12 from the rolled edge stop end 122 and affecting performance of the battery 1.

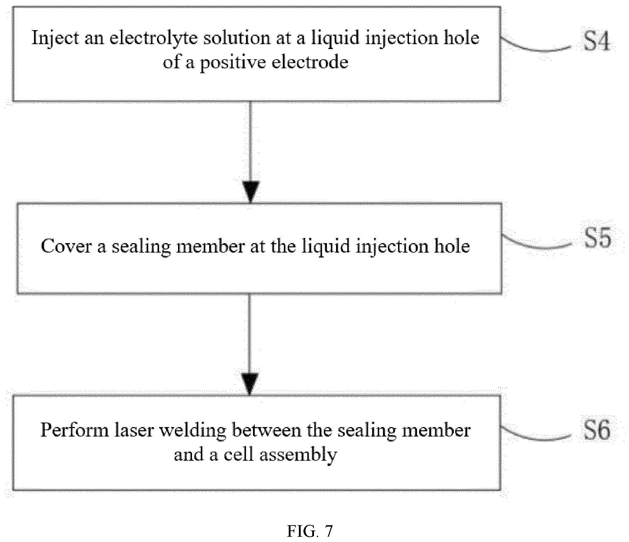

FIG. 7 is a flowchart of further steps of a battery assembling method according to an embodiment of the present application. As shown in FIG. 7, in the embodiment of the present application, the battery assembling method further includes:
step S4: an electrolyte solution is injected at a liquid injection hole 114 of the positive electrode;
step S5: the sealing member 16 covers the liquid injection hole 114; and
step S6: laser welding is performed between the sealing member 16 and the cell assembly 11.

Since the positive electrode of the cell assembly 11 is provided with the liquid injection hole 114, the electrolyte solution may be injected into the cell assembly 11 through the liquid injection hole 114 to decompose electrons through the electrolyte solution, and then the sealing member 16 that may cover the surface of the liquid injection hole 114 is arranged to seal the liquid injection hole 114, so as to prevent the electrolyte solution from flowing out of the liquid injection hole 114. Finally, laser welding is performed between the sealing member 16 and the cell assembly 11, so as to fix the sealing member 16 to the cell assembly 11 and improve airtightness of the sealing member 16 sealing the liquid injection hole 114.

The above is only preferable implementations of the present application and are not used for limiting the present application, and any modification, equivalent replacement, improvement, etc. made within the spirit and principle of the present application should be included in the scope of protection of the present application.

## Claims

1. A battery, comprising:
a cell assembly (11), two ends of the cell assembly (11) being provided with a positive electrode and a negative electrode respectively;
a casing (12), two ends of the casing (12) being formed as an open end (121) and a rolled edge stop end (122) respectively, the cell assembly (11) extending into the casing (12) from the open end and an end of the cell assembly (11) with the positive electrode being constrained and stopped at the rolled edge stop end (122); and
a negative electrode connection piece (13), covering the open end (121), the negative electrode connection piece (13) being a conductive piece electrically connected to the negative electrode and a casing part of the open end (121) respectively by means of laser welding spots.

2. The battery of claim 1, wherein the open end (121) is provided with a lip (123) abutting against the negative electrode, and an edge of the negative electrode connection piece (13) is bent to form a step (131) attached to the lip (123).

3. The battery of claim 1, wherein the cell assembly (11) comprises a positive electrode cover plate (111) fixed to the positive electrode, and the positive electrode cover plate (111) is provided with a conductive piece (113) electrically connected to a cell (112); and
the battery comprises an insulation washer (14) arranged between the positive electrode cover plate (111) and the rolled edge stop end (122), and the insulation washer (14) is provided with a through hole for the conductive piece (113) to pass through.

4. The battery of claim 1, wherein the battery comprises a negative electrode cover plate (15) attached to a surface of the negative electrode connection piece (13), and the negative electrode cover plate (15) seals the open end (121).

5. The battery of any one of claims 1-4, wherein the battery comprises a sealing member (16), the positive electrode of the cell assembly (11) is provided with a liquid injection hole (114), and the sealing member (16) is fixed to a surface of the liquid injection hole (114) and seals the liquid injection hole (114); and
the cell assembly (11) and the casing (12) are both cylindrical, and a material of the negative electrode connection piece (13) comprises any one of copper, iron and aluminum.

6. A battery assembling method, used for assembling the battery of any one of claims 1-5, wherein the battery assembling method comprises:
inserting a cell assembly (11) into a casing (12) from an open end (121), in such a way that a positive electrode of the cell assembly (11) is constrained at a rolled edge stop end (122), and a negative electrode of the cell assembly (11) is located at the open end (121);
attaching a negative electrode connection piece (13) to the negative electrode by performing laser welding; and
covering the negative electrode connection piece (13) onto the open end (121) by performing laser welding.

7. The battery assembling method of claim 6, before a step of covering the negative electrode connection piece (13) onto the open end (121) by performing laser welding, the method further comprises: rolling an edge of the open end (121) to form a lip (123) abutting against a periphery of the negative electrode at the open end (121); and bending an edge of the negative electrode connection piece (13) to form a step (131) attached to the lip (123).

8. The battery assembling method of claim 6, before a step of inserting the cell assembly (11) into the casing (12) from the open end (121), the method further comprises:
attaching a positive electrode cover plate (111) to the positive electrode by performing laser welding to form the cell assembly (11);
installing an insulation washer (14) into the casing (12) from the open end (121), and attaching the insulation washer to the rolled edge stop end (122), in such a way to allow a conductive piece (113) on the positive electrode cover plate (111) to pass through the insulation washer (14) and be exposed out of the casing (12).

9. The battery assembling method of claim 8, after a step of inserting the cell assembly (11) into the casing (12) from the open end (121) of the casing (12), the method further comprises: performing laser welding between the positive electrode cover plate (111) and the rolled edge stop end (122), and sealing the rolled edge stop end (122).

10. The battery assembling method of claim 6, further comprising:
injecting an electrolyte solution at a liquid injection hole (114) of the positive electrode;
covering a sealing member (16) at the liquid injection hole (114); and
performing laser welding between the sealing member (16) and the cell assembly (11).
